# EUROPEAN PATENT APPLICATION

(11) **EP 2 835 604 A1**
(43) Date of publication of application: **11.02.2015**
(21) Application number: 13771972.0
(22) Date of filing: 14.03.2013
(51) Int. Cl.: F25D 23/00

(54) **REFRIGERATOR**

(30) Priority: 03.04.2012 JP 2012084551; 23.05.2012 JP 2012117297
(71) Applicant: Panasonic Intellectual Property Management Co., Ltd., Osaka-shi, Osaka 540-6207 (JP)
(72) Inventor: HOASHI, Masakazu, 2-1-61 Shiromi, Chuo-ku, Osaka 540-6207 (JP); TSUJI, Yasuhiro, 2-1-61 Shiromi, Chuo-ku, Osaka 540-6207 (JP); KIMURA, Yoshito, 2-1-61 Shiromi, Chuo-ku, Osaka 540-6207 (JP); AZUMA, Yu, 2-1-61 Shiromi, Chuo-ku, Osaka 540-6207 (JP)
(74) Representative: Eisenführ Speiser
(86) International application number: PCT/JP2013/001686
(87) International publication number: WO 2013/150727

(57) **Abstract**

Refrigerator (100) includes RFID tag (21) in which an appliance information is stored, product label (23) that indicates the appliance information, and a plurality of parts that configure refrigerator (100). In addition, product label (23) and RFID tag (21) are disposed on the same part among the plurality of parts. In this way, refrigerator (100) is provided, in which product label (23) and RFID tag (21) for identifying the individual home appliance are centrally managed and a mismatch between the appliance information items is prevented in advance.

## Description

### TECHNICAL FIELD

The present invention relates to a refrigerator, particularly to a refrigerator that is used for a service system in which a communication network such as the Internet is used, on which an RFID tag is mounted.

### BACKGROUND ART

A system is proposed, in which information is exchanged between the system and a home appliance via a communication network such as the Internet to improve the convenience in using the home appliance. For example, a system that allows an accurate repair by connecting a refrigerator to the Internet and transmitting a content of a trouble to a service agent is proposed (for example, refer to PTL 1).

In the system described above, not only the refrigerator but also other home appliances are used. Such home appliances are referred to as so-called network home appliances, and have spread more and more due to a development of the communication infrastructure. In the future, it is expected that various home appliances located at home may be equipped with a communication function.

In a state of computerization of the home appliances being advanced, since the home appliances called white goods are used by young and old alike in the daily life, a convenience in using is very important.

In a state of computerization of the home appliances called white goods being advanced, in order to provide the services as described above, it becomes necessary to identify an individual home appliance on the system. That is, by giving appliance information including a product name and a manufacturing serial number of a home appliance to a product, it is necessary to identify the product on the system by taking out the information using the communication function.

On the other hand, in many cases of the home appliances, the above-described appliance information is explicitly expressed on a product label affixed to the home appliance.

Therefore, in the future, it is needed that two parts to which the same appliance information is given are assembled. At this time, when a mismatch between the appliance information items of two parts occurs, it becomes difficult to easily perform the services such as a management of parts or replacement of parts.

### Citation List

### Patent Literature

**PTL 1:** Japanese Patent Unexamined Publication No. 2002-295939

### SUMMARY OF THE INVENTION

The present invention provides a refrigerator in which a product label and an RFID tag for identifying the individual home appliance are centrally managed and a mismatch between the appliance information items is prevented in advance, and thus, services such as a management of parts or replacement of parts can easily be performed.

A refrigerator in the present invention includes an RFID tag in which appliance information is stored, a product label that indicates the appliance information, and a plurality of parts that configure the refrigerator. In addition, the product label and the RFID tag are disposed on the same part among the plurality of parts.

### BRIEF DESCRIPTION OF DRAWINGS

Fig. 1 is a front view illustrating a status of using a refrigerator in a first embodiment of the present invention.
Fig. 2 is a sectional view illustrating a schematic configuration of the refrigerator in the first embodiment of the present invention.
Fig. 3 is a plan view illustrating a schematic sectional configuration of the refrigerator in the first embodiment of the present invention.
Fig. 4 is an exploded perspective view illustrating a configuration of an operation unit of the refrigerator in the first embodiment of the present invention.
Fig. 5 is a front view illustrating a configuration of an operation unit of the refrigerator in the first embodiment of the present invention.
Fig. 6 is a perspective view illustrating a configuration inside the doors of the refrigerator in the first embodiment of the present invention.
Fig. 7 is a process chart illustrating a method of manufacturing the refrigerator in the first embodiment of the present invention.
Fig. 8 is a control block diagram illustrating the schematic configurations of a home appliance service system made of the refrigerator and a mobile terminal in the first embodiment of the present invention.
Fig. 9 is a flow chart for explaining operations of the home appliance service system made of the refrigerator and the mobile terminal in the first embodiment of the present invention.
Fig. 10 is a front view illustrating a status of using a refrigerator in a second embodiment of the present invention.
Fig. 11 is a sectional view illustrating a schematic configuration of the refrigerator in the second embodiment of the present invention.
Fig. 12 is a plan view illustrating a schematic sectional configuration of the refrigerator in the second embodiment of the present invention.
Fig. 13 is an exploded perspective view illustrating a configuration of an operation unit of the refrigerator in the second embodiment of the present invention.
Fig. 14 is a front view illustrating a configuration of an operation unit of the refrigerator in the second embodiment of the present invention.
Fig. 15 is a control block diagram illustrating the schematic configurations of a home appliance service system made of the refrigerator and a mobile terminal in the second embodiment of the present invention.
Fig. 16 is a flow chart for explaining operations of the home appliance service system made of the refrigerator and the mobile terminal in the second embodiment of the present invention.
Fig. 17 is a process chart illustrating a method of manufacturing the refrigerator in the second embodiment of the present invention.

### DESCRIPTION OF EMBODIMENTS

Hereinafter, the embodiments of the present invention will be described with reference to the drawings. The present invention will not be limited to the embodiments.

### (First embodiment)

A first embodiment of the present invention will be described.

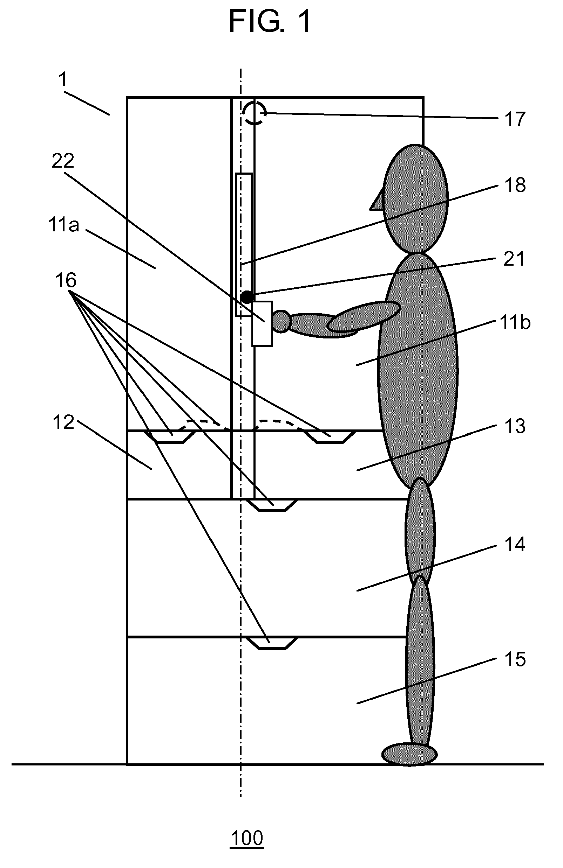

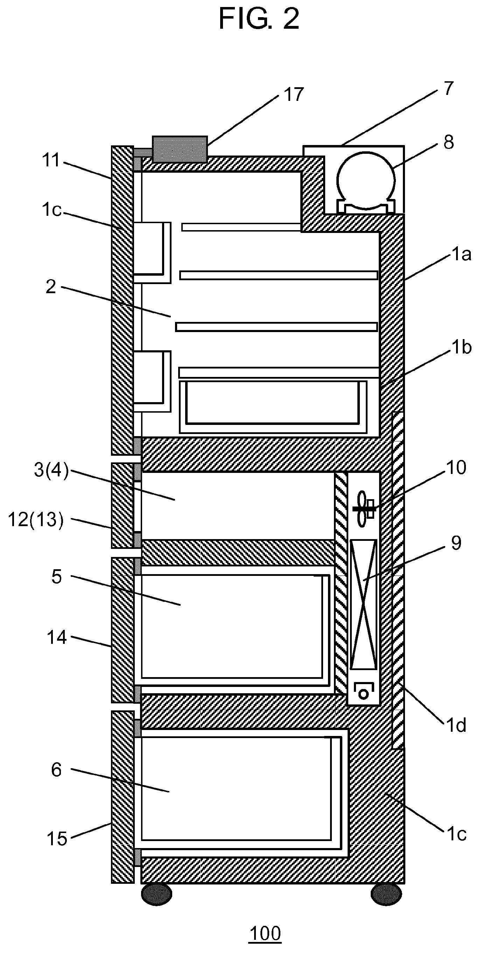

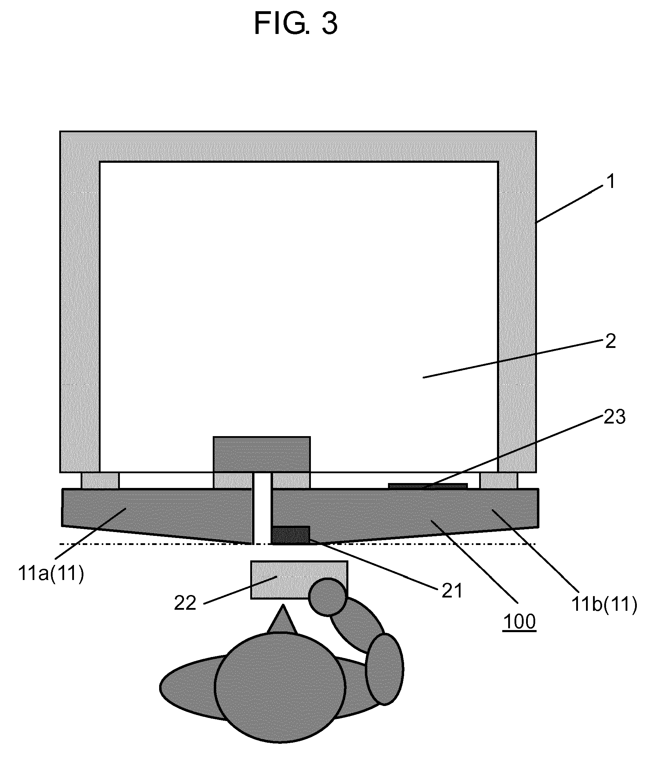

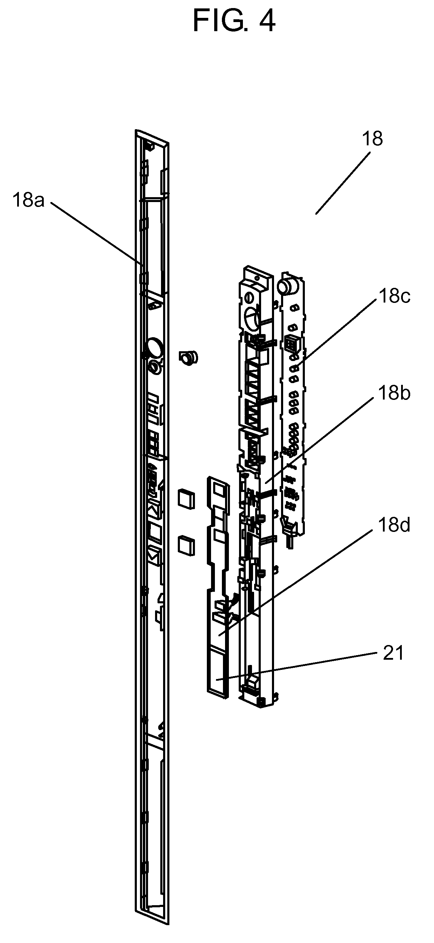

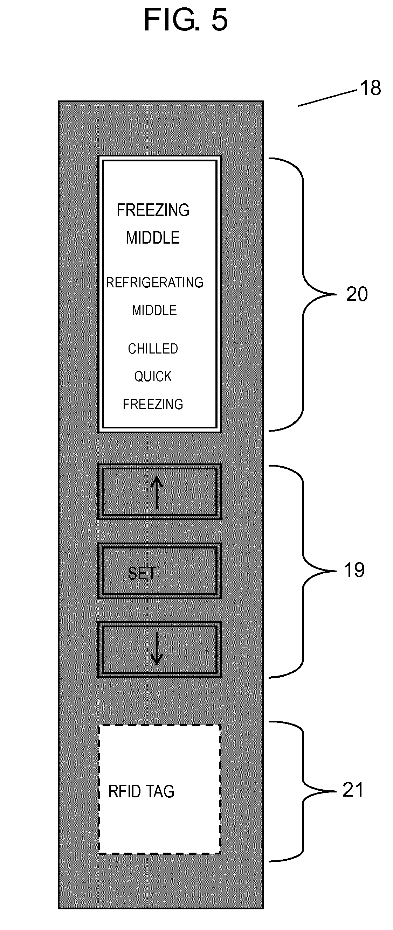

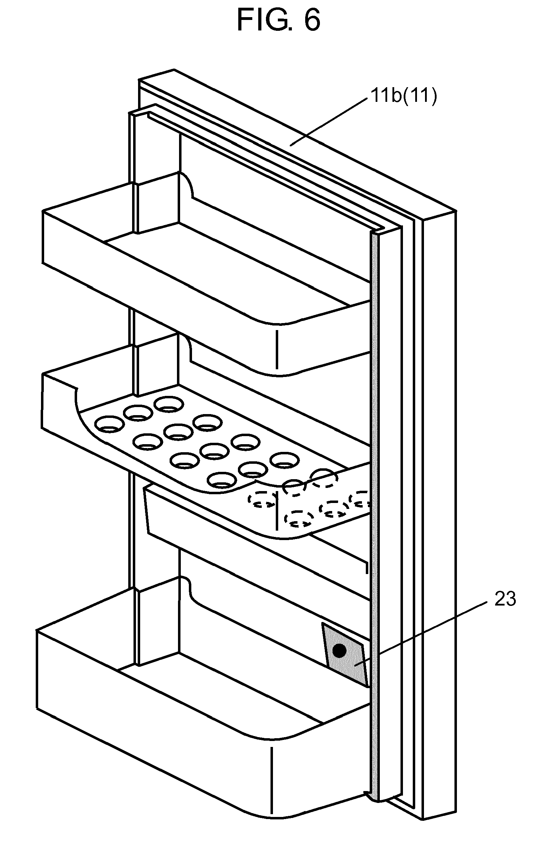

Fig. 1 is a front view illustrating a status of using refrigerator 100 in the first embodiment of the present invention, Fig. 2 is a sectional view illustrating a schematic configuration of refrigerator 100, Fig. 3 is a plan view illustrating a schematic sectional configuration of refrigerator 100, and Fig. 4 is an exploded perspective view illustrating a configuration of operation unit 18 of refrigerator 100. In addition, Fig. 5 is a front view illustrating a configuration of operation unit 18 of refrigerator 100, and Fig. 6 is a perspective view illustrating a configuration inside the doors of refrigerator 100.

As illustrated in Fig. 1 and Fig. 3, in the present embodiment, radio frequency identification (RFID) tag 21 is provided on refrigerator 100 for the short distance communication.

By causing mobile terminal 22 that includes the short distance communication function such as a mobile phone to approach refrigerator 100, a direct exchange of information between mobile terminal 22 and refrigerator 100 is performed. Mobile terminal 22 transmits the information obtained from refrigerator 100 to a host computer via the Internet line. In this way, it is possible to configure a home appliance service system in which various services are performed by mobile terminal 22 and refrigerator 100.

By using such a system, even in a case where there is a plurality of home appliances to be selected when the communication is executed, a user takes an action to certainly touch the target home appliance body with mobile terminal 22, and reads the appliance information. In this way, even the children or the elderly can intuitively select the target home appliance without misunderstanding. Accordingly, it is possible to provide the system in which the home appliance can be safely used without any hesitation for operation, which is easy to use.

In a state of computerization of the so-called white home appliances being advanced, in order to provide a service, it is needed to identify individual refrigerator 100. That is, it is needed to give appliance information associated with product name, a product color, a product specification, a manufacturing serial number, and a product number and a manufacturing location of refrigerator 100 to the product, and to read and identify the information by the communication function.

In addition, on the other hand, the appliance information such as the product name and the like is explicitly indicated on refrigerator 100 by an affixed product label 23 (refer to Fig. 3 and Fig. 6).

Therefore, in refrigerator 100, two parts to which the same information is given is required to be assembled. Here, the two parts are for example, product label 23 and RFID tag 21 to which the appliance information is given. Product label 23 can be visually checked. RFID tag 21 contains electronic information, but the content of information cannot be visually checked.

A case where such RFID tag 21 having the appliance information of refrigerator 100 is mounted on wrong refrigerator 100 (refrigerator 100 different from the refrigerator on which RFID tag 21 is to be mounted originally) is assumed. In this case, when the information communication is performed by mobile terminal 22 or the like and the appliance information of refrigerator 100 is displayed, there is a possibility of occurrence of problems such as: different type of information of refrigerator 100 may be displayed, information of wrong refrigerator 100 may be provided to the user via the Internet, or wrong information may be provided to a service man when the service repair is requested. As described above, mounting RFID tag 21 on the right individual (refrigerator 100) is a very important management item in order for there to be no mistake.

On the other hand, product label 23 which is visually recognizable can be checked each time by anyone, and thus, it is possible to easily manage. However, RFID tag 21 which is not visually changed by the stored information is a part that is extremely hard to manage.

Furthermore, refrigerator 100 is configured to be assembled from many sub-assembled parts, and the parts are replaced at the time of manufacturing or distribution or in a case where there is a failure in the parts during use by the customer.

Particularly, doors 11 to 15 of refrigerator 100 which are candidates for a position where RFID tag 21 is provided are easily removed, therefore, the frequency of replacement due to the external damage is high. In addition, there is also a case where doors 11 to 15 are removed when passing through a narrow passageway for the product transportation.

In the present embodiment, in view of these points, refrigerator 100 is provided, in which product label 23 and RFID tag 21 are centrally managed and a confusion due to a mismatch of the appliance information is prevented in advance, and thus the services such as the management of the parts or the replacement of the parts can be easily performed, and RFID tag 21 is mounted. Hereinafter, the configuration will be described in detail.

As illustrated in Fig. 1 and Fig. 2, refrigerator 100 includes refrigerator body 1 and a plurality of storage rooms. The plurality of storage rooms are configured to include, in an order from the top, refrigerating room 2, ice making room 3 and temperature switching room 4 positioned at the side of ice making room 3, freezing room 5, and vegetable room 6. The layout can appropriately be changed, if necessary. A set temperature of switching room 4 can be switched in a range from approximately -18°C which is a temperature in freezing room 5 to approximately 6°C which is a temperature in vegetable room 6.

Refrigerator body 1 is configured to include outer box 1a in which an iron plate is mainly used, inner box 1b molded by resin such as ABS, and rigid polyurethane foam 1c filled into and foamed in a space between outer box 1a and inner box 1b. In rigid polyurethane foam 1c in refrigerator body 1, vacuum heat insulating material 1d is partially buried, in order to improve heat insulation, if necessary. For example, in the example illustrated in Fig. 2, vacuum heat insulating material 1d is affixed to the space of the rear surface portion corresponding to ice making room 3, temperature switching room 4, and freezing room 5, and thus, becomes a complex with rigid polyurethane foam 1c.

Top surface portion of the refrigerator body 1 has a shape having a step-shaped recess in the direction toward the rear surface of refrigerator 100. In the step-shaped recess, machine room 7 is formed. In machine room 7, compressor 8 and components for a high-pressure side of a freezing cycle such as a dryer for water removal, and a refrigerator control unit, are accommodated. In this way, the storage capacity of vegetable room 6 at the bottom can be expanded.

On the other hand, cooler 9 configures a low pressure side of the freezing cycle. A plurality of storage rooms are cooled by cooling air generated in cooler 9 being forcibly blown by cooling fan 10 disposed at the rear side of freezing room 5.

Refrigerating room 2, ice making room 3, temperature switching room 4, freezing room 5, and vegetable room 6 are configured so as to be opened and closed by a plurality of doors 11 to 15 which are provided respectively corresponding to the storage rooms. Each of the plurality of doors 11 to 15 has handle portion 16. In addition, similarly to refrigerator body 1, each of the plurality of doors 11 to 15 is formed by rigid polyurethane foam 1c being filled into and foamed in the inner portion sealed by the metal surface plate and the inner box plate made from resin material such as ABS or the like.

In refrigerator 100 in the present embodiment, door 11 of refrigerating room 2 which is positioned at the uppermost portion of the refrigerator is a pair of double-door typed door, and is configured to include two doors 11a and 11b having different areas from each other disposed at the right and left of refrigerating room 2. On right side door 11b having a larger area than the other, automatic door opening and closing mechanism 17 is provided, and door 11b is configured so as to be opened by only slightly pressing the surface of door 11b.

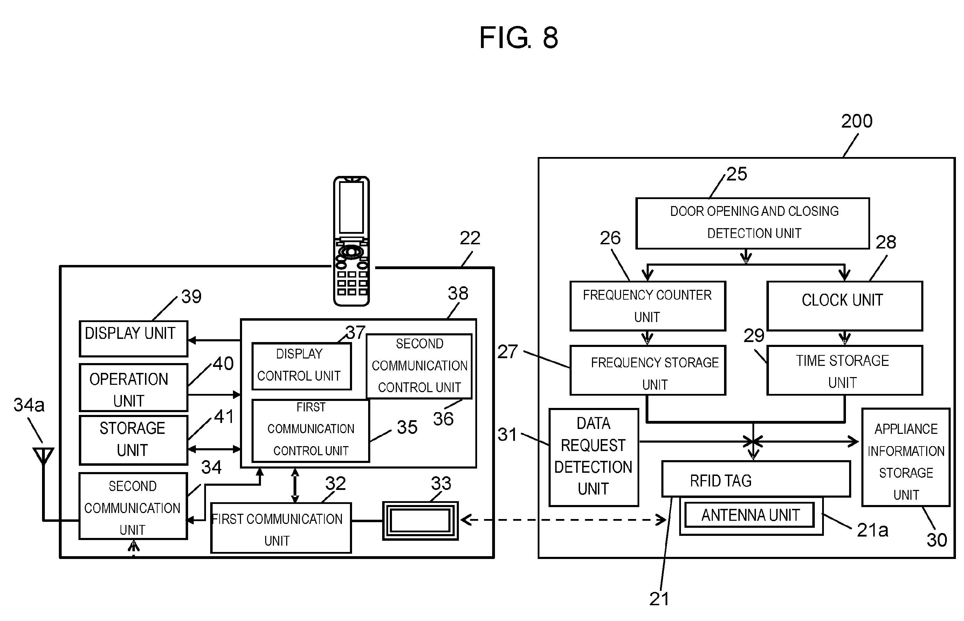

Door 11b is configured such that the opening and closing is detected by door opening and closing detection unit 25 (refer to Fig. 8). In addition, at the end portion of right side door 11b, operation unit 18 is provided in the vertical direction. On right door 11b, a DC wiring for the power supply to operation unit 18 or for the transmission of the control signal is disposed, however, an AC wiring is disposed at left side door 11a, not right side door 11b.

As illustrated in Fig. 4, operation unit 18 includes resin-made operation nameplate 18a provided on the end portion outer surface of door 11b in a vertical direction and resin-made substrate housing unit 18b positioned in the inside of operation nameplate 18a. In addition, operation unit 18 is positioned further inside of substrate housing unit 18b, and includes first substrate 18c that disposes the below-described display unit and each switch at the inner surface portion of operation nameplate 18a, and second substrate 18d that is disposed in such a manner that the RFID tag 21 faces the inner surface portion of operation nameplate 18a.

By such a configuration, RFID tag 21 is covered by the resin material, therefore, it is possible to prevent the electromagnagnetic wave from being influenced by the metal.

The outer surface of door 11 may be formed of a glass material instead of the metal, and by disposing operation unit 18 close to the inside of the glass material, it is also possible to prevent the electromagnetic transmission from being influenced by the metal.

In RFID tag 21, the appliance information including the ID number with which the product can be identified is registered, and at least by transmitting and receiving the ID number, the individual product can be identified. RFID tag 21 is configured so as to obtain information such as the set temperature for cooling and the frequency of door opening and closing or the accumulated door opening time during the operation of refrigerator 100 from control unit 200 of refrigerator 100, and can communicate with the outside via mobile terminal 22 such as below-described mobile phone.

As illustrated in Fig. 5, RFID tag 21 is provided on operation unit 18. RFID tag 21 is disposed at the lower part of electrostatic touch-type setting switch 19 for setting the temperature and the lower part of setting status display unit 20 which is disposed at the upper part of setting switch 19. As described above, RFID tag 21 is provided at the outer surface of door 11b.

As illustrated in Fig. 1 and Fig. 3, when the user causes mobile terminal 22 such as a mobile phone, a smart phone, or a PDA to approach RFID tag 21 without opening door 11, the information stored in RFID tag 21 is exchanged between mobile terminal 22 and RFID tag 21, and the received information is displayed on display unit 39 (refer to Fig. 8) of mobile terminal 22. Using mobile terminal 22 and refrigerator 100, it is possible to configure the home appliance service system in which the information can be transmitted and received to and from the host computer of the service agent via the Internet line. In the present embodiment, RFID tag 21 of a passive tag type and a proximity type having a communication distance of 100 mm or less is used.

In refrigerator 100 in the present embodiment, at the inner surface of door 11b where RFID tag 21 is provided, as illustrated in Fig. 6, product label 23 is affixed, on which the appliance information such as a product name, a manufacturing serial number, a product number, and a refrigerant name or an amount of refrigerant is listed. That is, product label 23 and RFID tag 21 are mounted on door 11b which is a part configuring refrigerator 100, as same assembled parts.

In this way, RFID tag 21 is provided on the outer surface of door 11b and product label 23 is affixed on the inner surface of door 11b. Since RFID tag 21 is provided on the outer surface of door 11b, when mobile terminal 22 approaches, door 11b does not need to be opened, and it is possible to improve the usability of refrigerator 100.

"Same assembled parts" indicates being configured as a group of parts with respect to the same refrigerator 100. In the present embodiment, this indicates that product label 23 and RFID tag 21 are parts for refrigerator 100 as a set.

By such a configuration, a possibility of different appliance information items from each other being given to product label 23 and RFID tag 21 can be greatly decreased. For example, if product label 23 and RFID tag 21 are mounted on refrigerator 100 as separate components, a possibility of each of these components being assembled in separate refrigerator 100 is high. In other words, the possibility of the appliance information items of product label 23 and RFID tag 21 assembled in one refrigerator 100 being different from each other becomes high.

On the other hand, in the present embodiment, product label 23 and RFID tag 21 are configured as one group of parts (a part in which product label 23 and RFID tag 21 become a set), and are provided on the same components (predetermined parts) of refrigerator 100, for example, in the present embodiment, on door 11b of refrigerator 100 as the same assembled parts. In this way, it is possible to certainly prevent the above-described problem.

In addition, in a case where the content of product label 23 affixed to the components of refrigerator 100 assembled at the time of manufacturing is different from the appliance information contained in RFID tag 21, the appliance information transmitted and received due to the user's causing mobile terminal 22 to approach to RFID tag 21 is different from that of the regular product, and there is a possibility of causing a mistake in replacement of the parts. However, such a mistake is less likely to occur in refrigerator 100 in the present embodiment.

In addition, the content of the appliance information given to RFID tag 21 also can be easily checked by seeing the description on product label 23. In RFID tag 21, there is a problem in that the appliance information cannot be visually checked. However, according to the present embodiment, such a problem can be solved by checking product label 23. That is, without reading the information in RFID tag 21 by a dedicated device, the information can be visually identified by product label 23.

In addition, in the present embodiment, the component of refrigerator 100 on which product label 23 and RFID tag 21 are mounted is door 11b. In this way, the problem due to the mistakes in replacement or mounting of door 11b which is frequently replaced or mounted and demounted, and thus, is comparatively easy to be mistakenly mounted to refrigerator body 1, can be prevented in advance. Therefore, it is possible to improve the reliability in part replacement service or the like.

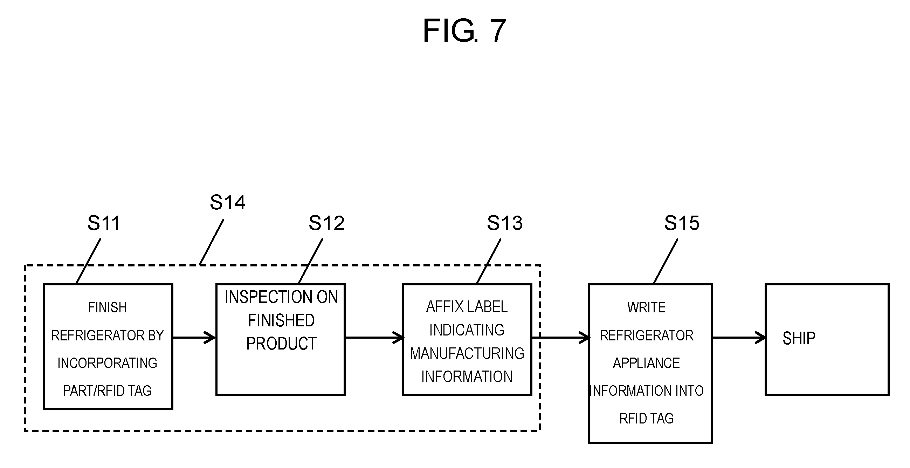

Hereinafter, an example of mounting product label 23 and RFID tag 21 on door 11b as the same assembled parts will be described using Fig. 7.

Fig. 7 is a process chart illustrating a method of manufacturing refrigerator 100 in the first embodiment of the present invention.

The method illustrated in Fig. 7 includes a refrigerator finishing process in STEP S14 and a refrigerator appliance information writing process in STEP S15.

STEP S14 will be described. First, similarly to the related art, refrigerator 100 starts to be assembled by incorporating each part. At this time, the assembly process of refrigerator 100 is finished by incorporating RFID tag 21 also when each part is assembled (S11).

Next, the inspection for finished product is performed by turning on the power of refrigerator 100 (S12).

After finishing the inspection, product label 23 is affixed to refrigerator 100 determined to be normal (S13). In this way, STEP S14 for finishing the assembly process of refrigerator 100 ends.

After that, in STEP S15, writing the appliance information including the ID number that enables RFID tag 21 to identify individual refrigerator 100 is performed. The writing is performed by causing a dedicated terminal to approach RFID tag 21, and by transmitting the appliance information to RFID tag 21 from the dedicated terminal. By the process described above, refrigerator 100 reaches a finished state and is shipped.

In this way, by writing the appliance information into RFID tag 21 at the time of affixing product label 23 after the finished product inspection of refrigerator 100, product label 23 and RFID tag 21 can be incorporated as the same assembled parts, and thus, it is possible to eliminate the mismatch of the appliance information between product label 23 and RFID tag 21.

Furthermore, according to the present embodiment, it is possible to achieve the effect of preventing an unused manufacturing serial number of refrigerator 100 from occurring. Even if after affixing product label 23 on which the appliance information such as the manufacturing serial number is described to refrigerator 100 and writing the appliance information into RFID tag 21, the finished product inspection is performed, product label 23 and RFID tag 21 can be incorporated as the same assembled parts. However, in this case, if refrigerator 100 fails in the finished product inspection which is the next process and is excluded, unused number in manufacturing serial number is generated, and there remains a complexity in product and parts management thereafter. On the other hand, according to the present embodiment, since the appliance information such as the manufacturing serial number is given to refrigerator 100 which passes the inspection, it is possible to prevent the above-described problem from occurring, in advance.

In addition, according to the present embodiment, in the manufacturing process, writing the appliance information into RFID tag 21 by turning on the power of refrigerator 100 need not be performed. Accordingly, it is possible to prevent the problems such as the condensation or an odor generation due to the operation of refrigerator 100 for writing the appliance information, and thus, the decrease in productivity can be eliminated.

In the present embodiment, when the user purchases refrigerator 100 manufactured as described above and turns on the power of refrigerator 100 for starting use, appliance information storage unit 30 (refer to Fig. 8) of control unit 200 and RFID tag 21 start to communicate. Then, the appliance information written in RFID tag 21 is written into appliance information storage unit 30 to be stored and held. That is, at the time of shipment, refrigerator 100 is in a state in which the appliance information is written in RFID tag 21, but the appliance information is not written in control unit 200. However, from the time when the user purchases refrigerator 100 and turns on the power, the appliance information is written into appliance information storage unit 30, and the refrigerator 100 becomes to be in a fully finished state.

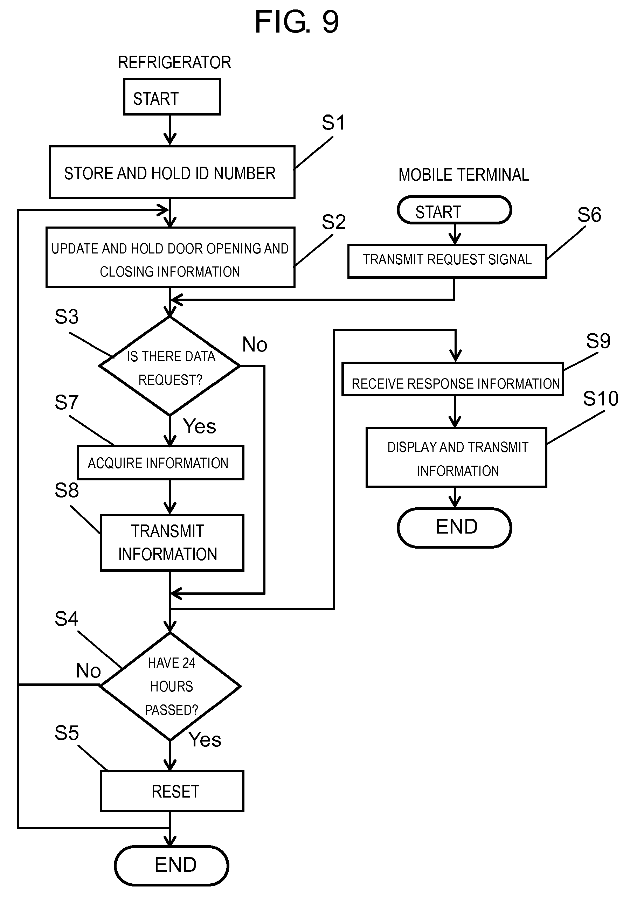

In the present embodiment, the configuration of home appliance service system in which RFID tag 21 incorporated in refrigerator 100 is used, will be described using Fig. 8 and Fig. 9.

Fig. 8 is a control block diagram illustrating the schematic configurations of a home appliance service system made of refrigerator 100 and mobile terminal 22 in the first embodiment of the present invention and Fig. 9 is a flow chart for explaining operations of the home appliance service system.

In Fig. 8, a functional block of mobile terminal 22 and control unit 200 of refrigerator 100 is illustrated.

Control unit 200 of refrigerator 100 includes door opening and closing detection unit 25, frequency counter unit 26, frequency storage unit 27, clock unit 28, time storage unit 29, data request detection unit 31, appliance information storage unit 30, RFID tag 21, and antenna unit 21a.

Door opening and closing detection unit 25 detects the opening and closing of at least door 11b.

Frequency counter unit 26 counts the frequency of door opening and closing detected by door opening and closing detection unit 25.

Frequency storage unit 27 stores the frequency of door opening and closing counted by frequency counter unit 26.

Clock unit 28 measures the door opening time when the door is opened detected by door opening and closing detection unit 25.

Time storage unit 29 accumulates and stores the door opening time measured by clock unit 28.

In RFID tag 21, as described above, the appliance information including the ID number is written, stored and held. In addition, the appliance information is also written into and, stored and held in appliance information storage unit 30 of control unit 200.

Furthermore, in the present embodiment, RFID tag 21 configures an output unit of the frequency of door opening and closing information from frequency storage unit 27 and the accumulated door opening time information from time storage unit 29. RFID tag 21 is formed of an IC chip integrated with antenna unit 21a.

When mobile terminal 22 approaches and requests the data, data request detection unit 31 detects the data request. RFID tag 21 itself includes data request detection unit 31. When data request detection unit 31 detects the data request, data request detection unit 31 supplies the power to RFID tag 21 and causes RFID tag 21 to operate.

Therefore, when mobile terminal 22 approaches and requests the data, RFID tag 21 is brought into the operation state by data request detection unit 31, and transmits the appliance information such as the ID number, the recent frequency of the door opening and closing information and the accumulated door opening time information stored in frequency storage unit 27 and time storage unit 29 respectively, to the outside via antenna unit 21a.

On the other hand, in the present embodiment, a typical mobile phone having a communication function is used as mobile terminal 22.

Mobile terminal 22 includes first communication unit 32 that performs a short distance communication, antenna 33 thereof, second communication unit 34 that performs a voice call and the Internet communication, antenna 34a thereof, mobile control unit 38, display unit 39 such as a liquid crystal display, operation unit 40 such as a touch switch, and storage unit 41. Mobile control unit 38 includes first communication control unit 35 that controls first communication unit 32, second communication control unit 36 that controls second communication unit 34, and display control unit 37.

By the user's operation of operation unit 40, when mobile terminal 22 is switched to the proximity communication by first communication control unit 35 from the communication by second communication control unit 36, mobile terminal 22 transmits the data request signal to the opposite party and comes into the state of receiving the data from the opposite party. Mobile control unit 38 causes second communication unit 34 to operate and transmits the received information to the host computer of the service agent via the Internet line. In this way, the user can receive a necessary service from the service agent. At this time, display control unit 37 switches between the displays on display unit 39, and the mobile terminal 22 displays the information received by the first communication unit 32 on display unit 39.

In refrigerator 100 in the present embodiment, when the replacement of the parts is needed due to the failure of the parts, for example, the failure of door 11b, the user causes mobile terminal 22 to approach RFID tag 21. In this way, mobile terminal 22 can receive the appliance information such as the product number of refrigerator 100, and can transmit the appliance information to the service agent via the Internet line. In this way, even the elderly or the children can accurately transfer the product number or the like to the service agent without taking a mistake. Therefore, it is possible to receive exact repair services from the service agent.

The operation of the home appliance service system configured as described above will be described using Fig. 9. Here, the description will be focused on the transmission and receiving of the information between RFID tag 21 and mobile terminal 22.

First, the process starts from the state in which the appliance information of refrigerator 100 is stored and held in RFID tag 21 (S1).

In the state, the detection of opening and closing of door 11b is performed by door opening and closing detection unit 25 and the door opening and closing information is updated, and then, the frequency of door opening and closing is stored in frequency storage unit 27 and the door opening time is stored in time storage unit 29 (S2).

Data request detection unit 31 checks whether or not there is the data request from mobile terminal 22 (S3). If there is no data request in STEP S3, the process proceeds to STEP S4.

Next, clock unit 28 checks whether or not one day (24 hours) has passed from the previous update of door opening and closing information (S4). In STEP S4, if it is determined that one day has not passed, the process returns to S2. On the other hand, in STEP S4, if it is determined that one day has passed, the process proceeds to S5.

In STEP S5, the door opening and closing information stored in time storage unit 29 and frequency storage unit 27 up to that time in STEP S2 is reset and the process returns to S2.

Here, it is assumed the user causes antenna 33 portion of mobile terminal 22 to approach RFID tag 21 on door 11b of refrigerator 100 and to transmit the data request signal (S6).

Data request detection unit 31 detects the data request and RFID tag 21 starts the operation.

RFID tag 21 acquires the appliance information, and in the present embodiment, acquires the door opening and closing information such as the frequency of the door opening and closing and the accumulated door opening time stored in frequency storage unit 27 and time storage unit 29 respectively (S7).

Next, RFID tag 21 transmits the information to mobile terminal 22 via antenna unit 21a (S8).

Mobile terminal 22 receives the information transmitted from refrigerator 100 (S9).

Mobile terminal 22 transmits the received information to the host computer of the service agent via the Internet line or displays the information on display unit 39 (S10).

In this way, in the present embodiment, it is possible for the user to cause mobile terminal 22 to closely and directly approach target refrigerator 100 itself and acquire the appliance information. Accordingly, even if the user is elderly or children, it is possible to receive the ID number which is the specific appliance information such as the product number, and to transfer the information to the service agent without taking a mistake. Therefore, it is possible for the user to receive an exact repair service from the service agent.

In the present embodiment, since RFID tag 21 has a receiving function, at the time of the parts replacement by the service agent, it is possible to prevent the parts from being replaced in advance without being aware of the mistake in parts replacement.

For example, when door 11b is replaced, the communication is performed between door 11b (RFID tag 21 provided on door 11b) and control unit 200, and then, comparing the appliance information stored in new RFID tag 21 and the appliance information stored in appliance information storage unit 30, if there is a mismatch in door 11b, it is possible to notify the user of such a mismatch by a warning or the like. Accordingly, it is possible to certainly detect the replacement mistake which easily occurs by mistakenly reading product label 23 affixed on door 11b, and it is possible to prevent the problem of door 11b being replaced without being aware of the mistake in parts replacement from occurring in advance. Therefore, it is possible to extremely improve the reliability of the parts replacement service.

In addition, by the user causing mobile terminal 22 to approach RFID tag 21, for example, the information of the set temperature for cooling is transmitted to mobile terminal 22 via the Internet line in advance, and then, such information can be transmitted to RFID tag 21 from mobile terminal 22. In this way, RFID tag 21 receives the set temperature information and transmits the information to control unit 200 of refrigerator 100, thereby changing the set temperature for cooling.

In addition, in refrigerator 100 in the present embodiment, by seeing display unit 39 of mobile terminal 22, the user can ascertain the door opening and closing information such as the frequency of door opening and closing and the accumulated door opening time. In this way, for example, when the frequency of door opening and closing and the accumulated door opening time are large, the user can reduce the frequency of door opening and closing thereafter, and can take an action for promoting the energy saving.

Furthermore, since refrigerator 100 does not need the display power for notifying the user of the frequency of the door opening and closing and the accumulated door opening time, it is possible to save that much power, and to improve the energy conservation of refrigerator 100. The user can ascertain the frequency of the door opening and closing and the accumulated door opening time via display unit 39 of mobile terminal 22. Therefore, refrigerator 100 itself absolutely does not consume the power for displaying the frequency of the door opening and closing and the accumulated door opening time. Therefore, it is possible to further promote that much energy conservation.

Furthermore, in the present embodiment, data request detection unit 31 is provided at refrigerator 100 side, and only in a case where data request detection unit 31 detects that the data is requested from mobile terminal 22, the power is supplied to RFID tag 21 and RFID tag 21 transmits the data. In this way, the power is not consumed by RFID tag 21 when the data is not requested from mobile terminal 22, and thus, it is possible to achieve that much power conservation.

In addition, in the present embodiment, RFID tag 21 is provided on door 11b of refrigerating room 2 which is the uppermost portion of refrigerator 100, that is, door 11b of the uppermost storage room among a plurality of storage rooms. In this way, such a failure that occurs in a case of providing RFID tag 21 on the doors located at the lower part, can be prevented from occurring. For example, there is no such a failure in which the cooling air which leaks and falls down when the door positioned above the door on which RFID tag 21 is provided is opened touches RFID tag 21, and the condensation occurs on the surface of RFID tag 21, and thus, the communication state deteriorates and the component reliability decreases. In the present embodiment, the exchange of the frequency of the door opening and closing and the accumulated door opening time between mobile terminal 22 and RFID tag 21 can be accurately and reliably performed, and thus, it is possible to configure refrigerator 100 with high quality, and thus, the user can safely use refrigerator 100.

One of issues of refrigerator 100 in a case of communicating by an operation of touching of refrigerator 100 with mobile terminal 22 is the position where RFID tag 21 is disposed. In a case of a typical wireless communication device, there is no problem in disposing the device at the position which the user's hands cannot reach or the position which the user cannot see such as the rear surface or the top surface of refrigerator 100. However, in the present embodiment, in order to prevent a mis-communication with other home appliances, in order to realize a communication by the intuitive touching operation from the proximity distance, RFID tag 21 is disposed in the range where the user's hands reach, that is, at the front surface portion of refrigerator 100 from the viewpoint of a convenience in using.

In a case where RFID tag 21 is disposed at the front surface of refrigerator 100, the user makes his hand holding mobile terminal 22 be in proximity to refrigerator body 1. For this reason, there is a case where water or dirt of food attached to the hand is attached to the surface of antenna disposition portion of RFID tag 21 of refrigerator body 1, or water or dirt spilt at the time of taking the food in and out, and is attached to the surface of antenna disposition portion of RFID tag 21, and thus, there is a possibility that the communication state of refrigerator body 1 deteriorates.

In addition, even though the hand may not be wet nor dirty, in order to perform the communication, when mobile terminal 22 itself which is a precision appliance or the hand holding mobile terminal 22 is brought proximately to refrigerator body 1, there is also a possibility of a problem occurring that dirt or water of refrigerator body 1 is attached to the hand and causes an incorrect operation of a touch panel of mobile terminal 22, or makes the screen hard to see.

On the other hand, in refrigerator 100 in the present embodiment, by providing RFID tag 21 as a communication unit on the uppermost door, the food is not taken in and out from the storage room at the portion above the communication unit, and thus, there is no possibility of the water or dirt falling and attaching when the food is taken in and out. Furthermore, according to the present embodiment, RFID tag 21 is covered by resin and the attaching of dirt or water to the communication unit can be suppressed, and thus, it is possible to prevent the above-described problem.

In addition, when the opening and closing of the door is performed, the cooling air in the refrigerator flows out and spills to fall to the door positioned at the lower portion of the opened door, and thus the temperature of refrigerator 100 decreases. Accordingly, when the temperature on the surface of RFID tag 21 provided on the door decreases to a temperature lower than the dew-point temperature due to the cooling air leakage, the condensation occurs, and there is a possibility that electromagnetic waves are inhibited by the water, and a problem occurs. On the contrary, according to the present embodiment, since RFID tag 21 is provided on the uppermost door 11b, the opening and closing of the door of the storage room positioned at the portion above RFID tag 21 cannot be performed, the temperature of RFID tag 21 does not decrease, and there is no concern regarding the communication failure due to condensation.

In a layout in which the freezing room 5 having low room temperature is disposed at the upper portion, particularly the temperature of the leaked cooling air decreases, and then the temperature of the lower door easily decreases, and therefore, the above-described fact has an advantageous effect.

In addition, in the present embodiment, RFID tag 21 is provided on door 11b corresponding to refrigerating room 2 among a plurality of storage rooms. Since the temperature in refrigerating room 2 is higher than that in ice making room 3 or freezing room 5, it is possible to suppress the influence of the cooling air in the room on RFID tag 21 to be small. That is, since the difference in temperature between the surface and the inner portion of RFID tag 21 is suppressed to be small, the occurrence of the condensation can be suppressed, and it is possible to reduce the failure such as the deterioration of the communication state and the decrease of the component reliability.

Furthermore, in the present embodiment, RFID tag 21 is incorporated into operation unit 18 provided at the end portion of right side door 11b. There is a possibility that the user performs the affixing of the stickers or the like to door 11b, there are many cases where the sticker is affixed to the center portion of door 11b, and there are less cases where the sticker covers the surface of RFID tag 21 located at the end portion of door 11b. Therefore, the user can directly cause mobile terminal 22 to closely face RFID tag 21, and the erroneous transmission and receiving of the data due to the approaching of mobile terminal 22 over the sticker can be reduced. In addition, the user does not need to perform useless action such as removing the sticker covered by the surface of RFID tag 21 and causing mobile terminal 22 to closely approach RFID tag 21, and thus, it is possible to secure the reliable communication performance and to improve the usability

In addition, in the present embodiment, RFID tag 21 is provided on right side door 11b of refrigerating room 2 among the double-door typed doors 11. In this way, it is possible to reduce the occurrence of the failure with respect to RFID tag 21 due to the cooling air in the refrigerating room. There are relatively many right-handed users and the frequency of the opening and closing of right side door 11b by the right-handed user is high. In a case where right side door 11b is opened and the cooling air in the refrigerating room leaks out, there is a high possibility that the cooling air diffuses to the surface of left side door 11a at the opposite side to right side door 11b, and thus, the possibility that the cooling air goes around into the surface side of right side door 11b (RFID tag 21 installed side) which is the rear side seen from the leaked cooling air, is very low. Therefore, there is almost no possibility that the cooling air touches RFID tag 21 provided on the surface side of right side door 11b, and it is possible to suppress the failure such as the deterioration of the communication state and the decrease of the component reliability due to the condensation occurring on the surface of RFID tag 21.

Furthermore, in the present embodiment, right side door 11b is described as being shaped to have an area larger than that of left side door 11a. In this configuration, the amount of leakage of cooling air when right side door 11b is opened increases compared to the reverse case. By RFID tag 21 being provided on the surface side of right side door 11b where the leaked cooling air increases, the influence of the going-around of cooling air described above can be reduced, and thus, it is possible to reduce concerns such as the deterioration of the communication state and the decrease of the component reliability.

In addition, on door 11b on which RFID tag 21 is provided, there is provided a wiring to operation unit 18 and a wiring through which the door opening and closing information from frequency storage unit 27 or time storage unit 29 in the control unit 200 is transmitted. In the present embodiment, both of these are DC wirings and an AC wiring is not provided on door 11b. Accordingly, the influence of noise occurring due to the AC wiring does not interfere with the transmission and receiving of RFID tag 21, and thus, it is possible to secure the accurate and reliable communication performance.

In addition, in the present embodiment, on right side door 11b of refrigerating room 2 on which RFID tag 21 is provided, in response thereto, automatic door opening and closing mechanism 17 is provided. In this way, even if a hand of a user working in the kitchen is wet with water, it is possible to reduce the failure of RFID tag 21 due to the influence of water. That is, since the user only slightly touches door 11b and door 11b is opened, at the time of opening and closing door 11b, it is possible to make the amount of water drops attached to the surface of door 11b be extremely small or cause the water drops not to be attached. In this way, accordingly, it is possible to prevent, when the user causes mobile terminal 22 to approach RFID tag 21, the water drops attached to the surface of door 11b from being attached to RFID tag 21 itself or mobile terminal 22 which is close to RFID tag 21, and then wetting or contaminating RFID tag 21 or mobile terminal 22. In this way, it is possible to further reduce the occurrence of the failure such as the deterioration of the communication state and the decrease of the component reliability.

Furthermore, in the present embodiment, RFID tag 21 is disposed at the position separated from handle portions 16 provided on door 11b and the position higher than handle portion 16 (refer to Fig. 1). According to this configuration, in a case where the user's hand is wet, and when opening door 11b by the wet hand, even though the water drops may be attached to handle portion 16, since RFID tag 21 is separated from handle portion 16 and is positioned higher than handle portion 16, even though the water drops attached to handle portion 16 may be spread to right and left sides or drop down, the water drops does not reach the position where RFID tag 21 is disposed. In this way, even if mobile terminal 22 is brought to be close to RFID tag 21, it is possible to prevent RFID tag 21 itself or mobile terminal 22 which is close to RFID tag 21 from becoming wet or contaminated by the water drops attached to the surface of handle portion 16 of door 11b, and thus, it is possible to reduce the failure such as the deterioration of the communication state and the occurrence of the decrease of the component reliability

As described above, in refrigerator 100 described in the present embodiment, product label 23 and RFID tag 21 are centrally managed and a confusion of a mismatch of the appliance information can be prevented in advance.

An example described in the present embodiment is one aspect for realizing the present invention, and various modifications can be made within the objective scope of the present invention.

For example, regarding the communication method, as long as the operation of identifying the operation target using the touching or holding operation with respect to the product is possible, other short distance communication methods can be used.

In addition, in the present embodiment, the information provided to the user is both of the frequency of the door opening and closing and the accumulated door opening time for the power saving education. However, the information may be any one of the above. In addition, any other information may be provided.

In addition, in the present embodiment, RFID tag 21 is provided on the door of refrigerating room 2, but may be provided on the other door, for example, may be provided on left side door 11a of double-door typed door. In a case where RFID tag 21 is provided on left side door 11a, when the user is a right-handed person, the user can easily open and close the door by the dominant hand without crossing the hand. In this way, it is possible to cause mobile terminal 22 to closely approach RFID tag 21 using the left hand at the same time as opening and closing door 11b by the right hand, and thus, the usability can be improved.

Furthermore, by providing the transmission and receiving unit at the refrigerator body 1 side also corresponding to RFID tag 21 provided on door 11b, when door 11b is opened, the transmission and receiving unit on refrigerator body 1 side may detect the opening. That is, RFID tag 21 on door 11b may also serve as door opening and closing detection unit 25. In this way, it is possible to simplify the configuration. While it is preferable that the door opening and closing detection unit be also provided corresponding to all the doors, for example, however, it may be provided on one door of which the frequency of opening and closing is high or on a plurality of doors.

In addition, RFID tag 21 can receive the frequency of the door opening and closing information and the accumulated door opening time information from control unit 200 via the short distance communication rather than via the wiring.

As described above, according to the present embodiment, by managing a plurality of parts to which appliance information of the product is given as one assembled part, it is possible to centrally manage product label 23 and RFID tag 21. In addition, it is possible to easily manage RFID tag 21 which cannot be visually identified, and to eliminate the mismatch between the appliance information items given to product label 23 and RFID tag 21, and the mistake in part insertion or part replacement can be prevented, and thus, it is possible to provide refrigerator 100 with a high reliability.

### (Second embodiment)

Next, a second embodiment of the present invention will be described.

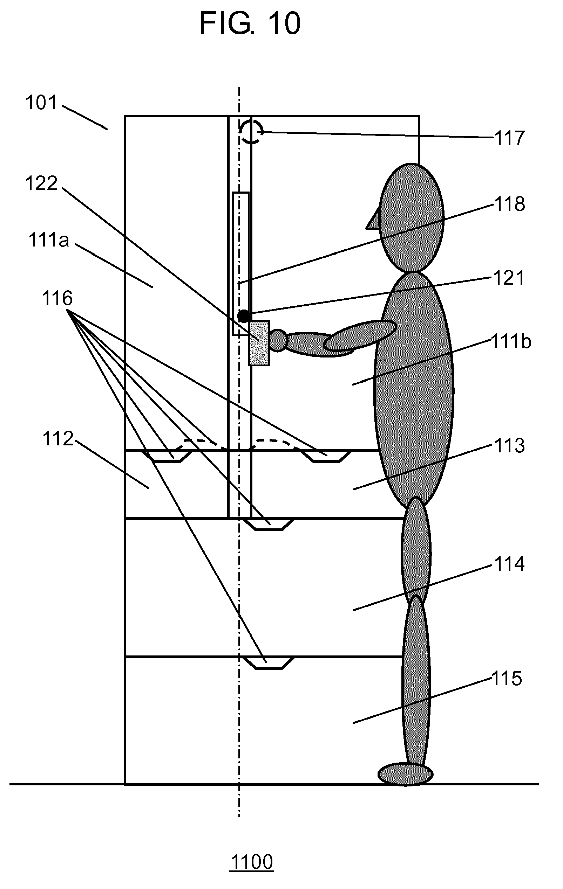

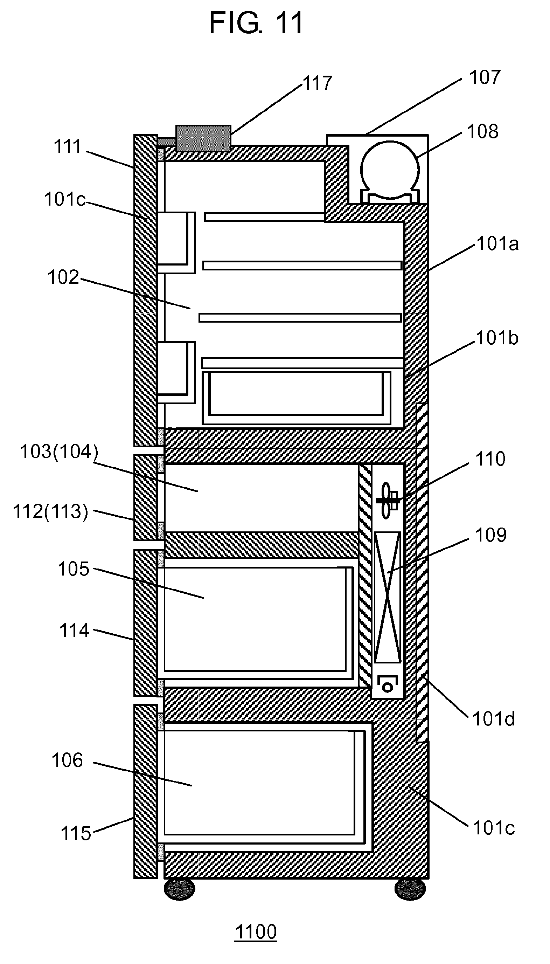

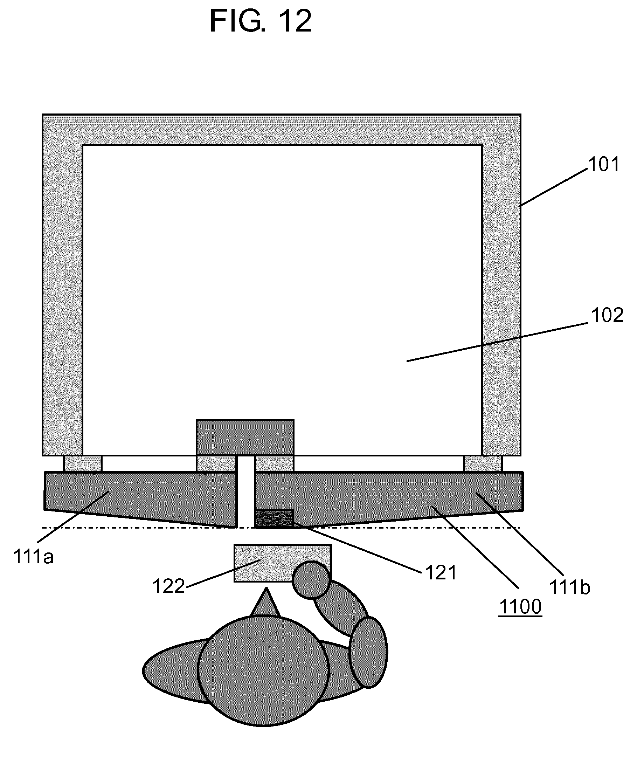

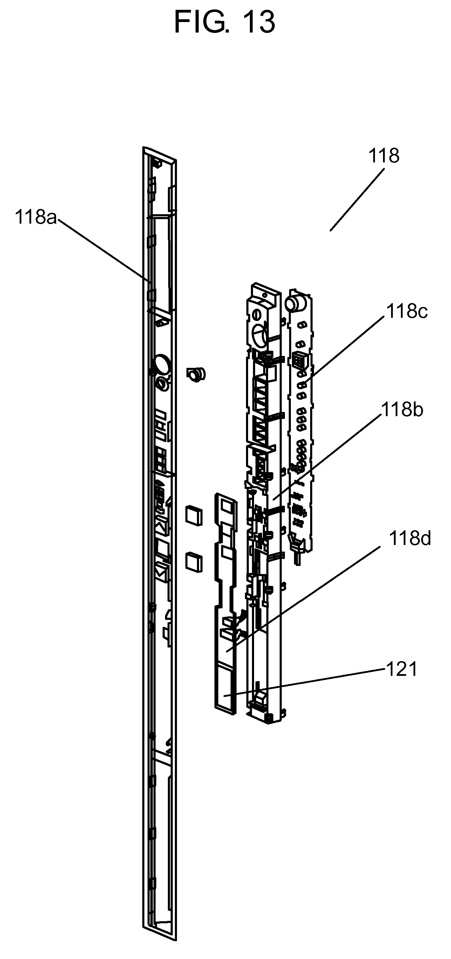

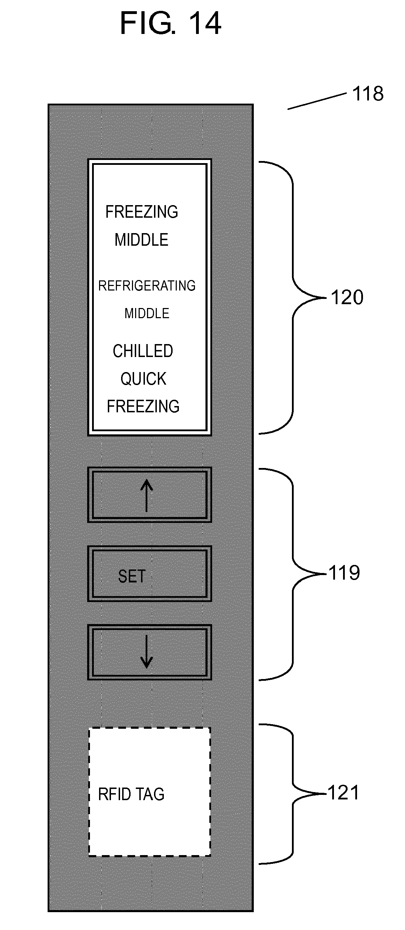

Fig. 10 is a front view illustrating a status of using refrigerator 1100 in the second embodiment of the present invention, Fig. 11 is a sectional view illustrating a schematic configuration of refrigerator 1100, Fig. 12 is a plan view illustrating a schematic sectional configuration of refrigerator 1100, and Fig. 13 is an exploded perspective view illustrating a configuration of operation unit 118 of refrigerator 1100. In addition, Fig. 14 is a front view illustrating a configuration of operation unit 118 of refrigerator 1100.

As illustrated in Fig. 10 and Fig. 11, refrigerator 1100 includes refrigerator body 101 and a plurality of storage rooms. The plurality of storage rooms are configured to include, in an order from the top, refrigerating room 102, ice making room 103, temperature switching room 104 positioned at the side of ice making room 103, freezing room 105, and vegetable room 106. The layout can appropriately be set, if necessary. A set temperature in temperature switching room 104 can be switched to be in a range from approximately -18°C which is a temperature in freezing room 105 to approximately 6°C which is a temperature in vegetable room 106.

Refrigerator body 101 is configured to include outer box 101a in which an iron plate is mainly used, inner box 101b molded by resin such as ABS, and rigid polyurethane foam 101c filled into and foamed in a space between outer box 101a and inner box 101b. In rigid polyurethane foam 101c of refrigerator body 101, in order to further improve heat insulation performance, vacuum heat insulating material 101d is partially buried, if necessary. For example, in the example illustrated in Fig. 11, vacuum heat insulating material 101d is affixed in the space of the rear surface portion corresponding to ice making room 103, temperature switching room 104, and freezing room 105, and thus, becomes a complex with rigid polyurethane foam 101c.

Top surface portion of the refrigerator body 101 has a shape having a step-shaped recess toward the rear surface direction of refrigerator 1100. In the step-shaped recess, machine room 107 is formed. In machine room 107, compressor 108 and components for a high-pressure side of a freezing cycle such as a dryer for water removal, and a refrigerator control unit, are accommodated. In this way, the storage capacity of vegetable room 106 at the bottom can be expanded.

On the other hand, cooler 109 configures a low pressure side of the freezing cycle. A plurality of storage rooms are cooled by cooling air generated in cooler 109 being forcibly blown by cooling fan 110 disposed at the rear side of freezing room 105.

Refrigerating room 102, ice making room 103, temperature switching room 104, freezing room 105, and vegetable room 106 are configured so as to be opened and closed by a plurality of doors 111 to 115 which are provided respectively corresponding to the storage rooms. Each of the plurality of doors 111 to 115 has handle portion 116. In addition, each of the plurality of doors 111 to 115, similarly to refrigerator body 101, is formed by rigid polyurethane foam 101c being filled into and foamed in the inner portion sealed by the metal surface plate and the inner box plate made from resin material such as ABS.

In refrigerator 1100 in the present embodiment, door 111 of the refrigerating room 102 which is positioned at the uppermost portion of the refrigerator is a pair of double-door typed doors, and is configured to include two doors 111a and 111b having different sizes from each other disposed at the right and left of refrigerating room 102. On right side door 111b having a large size, automatic door opening and closing mechanism 117 is provided, and door 111b is configured so as to be opened by only slightly pressing the surface thereof.

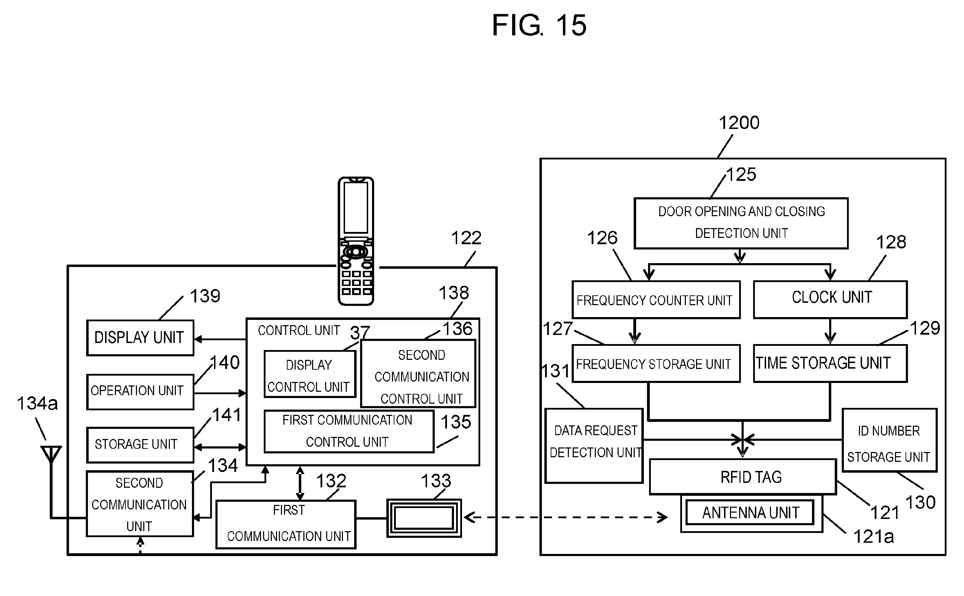

Door 111b is configured such that the opening and closing is detected by door opening and closing detection unit 125 (refer to Fig. 15). In addition, at the end portion of right side door 111b, operation unit 118 is provided in the vertical direction. On right door 111b, a DC wiring for the power supply to operation unit 118 or for the transmission of the control signal is disposed, however, an AC wiring is disposed at left side door 111a, rather than the right side door 111b.

As illustrated in Fig. 13, operation unit 118 includes resin-made operation nameplate 118a provided on the end portion outer surface of door 111b in a vertical direction and resin-made substrate housing unit 118b positioned inside of operation nameplate 118a. In addition, operation unit 118 is positioned at further inside of substrate housing unit 118b, and includes first substrate 118c that disposes the below-described display unit and each switch at the inner surface portion of operation nameplate 118a, and second substrate 118d that is disposed in such a manner that the RFID tag 121 faces the inner surface portion of operation nameplate 118a.

By such a configuration, RFID tag 121 is covered by the resin material, therefore, it is possible to prevent the electromagnetic transmission from being influenced by the metal.

The outer surface of door 111 may be formed of a glass material instead of the metal, and by disposing operation unit 118 close to the inside of the glass, it is also possible to prevent the electromagnetic wave from being influenced by the metal.

In RFID tag 121, the appliance information including the ID number with which the product can be identified is registered, and at least by transmitting and receiving the ID number, the individual product can be identified. RFID tag 121 is configured so as to obtain information such as the set temperature for cooling and the frequency of door opening and closing or the accumulated door opening time during the operation of refrigerator 1100 from control unit 1200 of refrigerator 1100, and can communicate with the outside via mobile terminal 122 such as below-described mobile phone.

As illustrated in Fig. 14, RFID tag 121 is provided on operation unit 118. RFID tag 121 is the lower part of electrostatic touch-type setting switch 119 for setting the temperature and is disposed at the lower part of setting status display unit 120 which is disposed at the upper part of setting switch 119. As described above, RFID tag 121 is provided at the outer surface of door 111b.

As illustrated in Fig. 10 and Fig. 12, when the user causes mobile terminal 122 such as a mobile phone, a smart phone, or a PDA to approach RFID tag 121 without opening door 111, the information stored in RFID tag 121 is exchanged between mobile terminal 122 and RFID tag 121, and the received information is displayed on display unit 139 (refer to Fig. 15) of mobile terminal 122. Using mobile terminal 122 and refrigerator 1100, it is possible to configure the home appliance service system in which the information can be transmitted and received to and from the host computer of the service agent via the Internet line. In the present embodiment, RFID tag 121 of a passive tag type and a proximity type having a communication distance of 100 mm or less is used.

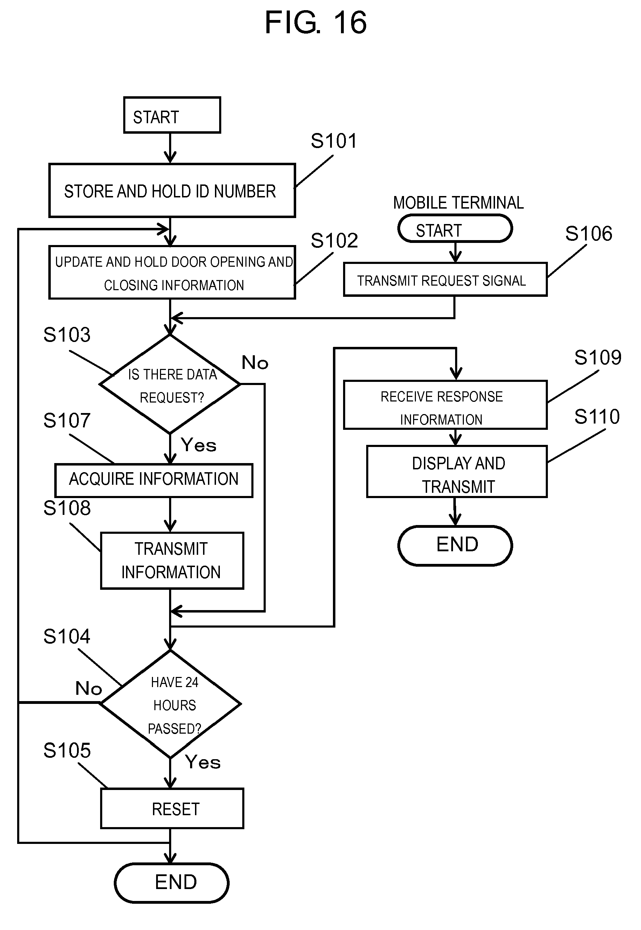

In the present embodiment, the configuration of home appliance service system in which RFID tag 121 incorporated in refrigerator 1100 is used, will be described using Fig. 15 and Fig. 16.

Fig. 15 is a control block diagram illustrating the schematic configurations of a home appliance service system made of refrigerator 1100 and mobile terminal 122 in the second embodiment of the present invention and Fig. 16 is a flow chart for explaining operations of the home appliance service system.

In Fig. 15, a functional block of mobile terminal 122 and control unit 1200 of refrigerator 1100 is illustrated.

Control unit 1200 of refrigerator 1100 includes door opening and closing detection unit 125, frequency counter unit 126, frequency storage unit 127, clock unit 128, time storage unit 129, data request detection unit 131, ID number storage unit 130, RFID tag 121, and antenna unit 121a.

Door opening and closing detection unit 125 detects the opening and closing of at least door 111.

Frequency counter unit 126 counts the frequency of door opening and closing detected by door opening and closing detection unit 125.

Frequency storage unit 127 stores the frequency of door opening and closing counted by frequency counter unit 126.

Clock unit 128 measures the door opening time when the door is opened detected by door opening and closing detection unit 125.

Time storage unit 129 accumulates and stores the door opening time measured by clock unit 128.

In RFID tag 121, as described above, at least the ID number is written, stored and held. In addition, the ID number is also written, stored, and held in ID number storage unit 130 of control unit 1200.

Furthermore, in the present embodiment, RFID tag 121 configures an output unit of the frequency of door opening and closing information from frequency storage unit 127 and the accumulated door opening time information from time storage unit 129. RFID tag 121 is formed of an IC chip integrated with antenna unit 121a.

When mobile terminal 122 approaches and requests the data, data request detection unit 131 detects the data request. RFID tag 121 itself includes data request detection unit 131. When data request detection unit 131 detects the data request, data request detection unit 131 supplies the power to RFID tag 121 and causes RFID tag 121 to operate.

Therefore, when mobile terminal 122 approaches and requests the data, RFID tag 121 is brought into the operation state by data request detection unit 131, and transmits the appliance information such as the ID number, the recent frequency of the door opening and closing information and the accumulated door opening time information stored in frequency storage unit 127 and time storage unit 129 respectively, to the outside via antenna unit 121a.

On the other hand, in the present embodiment, a typical mobile phone having a communication function is used as mobile terminal 122.

Mobile terminal 122 includes first communication unit 132 that performs a short distance communication and antenna 133 thereof, second communication unit 134 that performs a voice call and the Internet communication and antenna 134a thereof, mobile control unit 138, display unit 139 such as a liquid crystal display, operation unit 140 such as a touch switch, and storage unit 141. Mobile control unit 138 includes first communication control unit 135 that controls first communication unit 132, second communication control unit 136 that controls second communication unit 134, and display control unit 137.

By the user's operation of operation unit 140, when mobile terminal 122 is switched to the proximity communication by first communication control unit 135 from the communication by second communication control unit 136, mobile terminal 122 transmits the data request signal to the opposite party and is brought into the state capable of receiving the data from the opposite party Mobile control unit 138 causes second communication unit 134 to operate and transmits the received information to the host computer of the service agent via the Internet line. In this way, the user can receive a necessary service from the service agent. At this time, display control unit 137 switches between the displays on display unit 139, and the mobile terminal 122 displays the information received by first communication unit 132 on display unit 139.

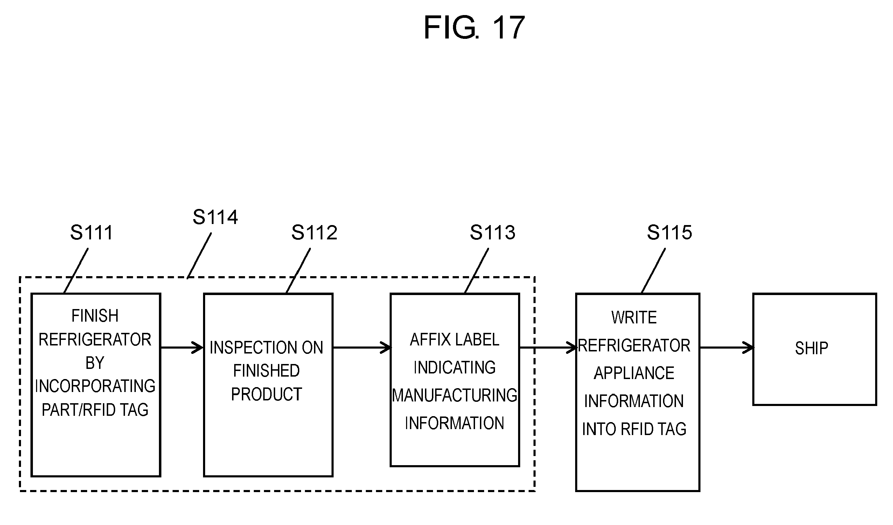

A method of manufacturing refrigerator 1100 on which RFID tag 121 in the present embodiment is mounted will be described using Fig. 17.

Fig. 17 is a process chart illustrating a method of manufacturing refrigerator 1100 in the second embodiment of the present invention.

The method illustrated in Fig. 17 includes a finishing process of refrigerator in STEP S114 and a refrigerator appliance information writing process in STEP S115.

STEP S114 will be described. First, similarly to the related art, refrigerator 1100 starts to be assembled by incorporating each part. At this time, the assembly process of refrigerator 1100 is finished by incorporating RFID tag 121 also when each part is assembled (S111).

Next, the finished product inspection is performed by turning on the power of refrigerator 1100 (S112).

After finishing the inspection, manufacturing label is affixed to refrigerator 1100 determined to be normal (S113). In this way, STEP S114 for finishing the assembly process of refrigerator 1100 ends.

After that, in STEP S115, writing the appliance information of refrigerator 1100 into RFID tag 121 is performed. The writing is performed by causing a dedicated terminal to approach RFID tag 121, and by transmitting the appliance information to RFID tag 121 from the dedicated terminal. By the process described above, refrigerator 1100 is in a finished state and is shipped.

When the user purchases the product and turns on the power of refrigerator 1100 to start use, ID number storage unit 130 (refer to Fig. 15) of control unit 1200 and RFID tag 121 start to communicate to each other. Then, the ID number written in RFID tag 121 is written into ID number storage unit 130 to be stored and held. That is, at the time of shipment, refrigerator 1100 is in a state in which the ID number is written in RFID tag 121, but the ID number is not written in control unit 1200. However, from the time when the user purchases refrigerator 1100 and turns on the power, the ID number is written into ID number storage unit 130, and refrigerator 1100 becomes to be in a fully finished state.

Accordingly, in the manufacturing process, writing the ID number into RFID tag 121 by turning on the power of refrigerator 1100 may not be performed. Accordingly, it is possible to prevent the problems such as the condensation or an odor generation due to the operation of refrigerator 1100 for writing the ID number, and thus, the decrease in productivity can be eliminated.

In addition, in manufacturing or assembling refrigerator 1100, there are a large number of parts that are shared in the product line-up of different colors and sizes. Accordingly, in the state of the parts of the product before the finishing, in a case where ID number is written into RFID tag 121 but the part is not a regular part, there is a possibility of a major problem occurring. However, in the present embodiment, as described above, the appliance information such as ID number is written after the finishing of the assembly, and is checked. Therefore, it is possible to prevent such a problem from occurring, in advance.

In addition, in the process of finishing refrigerator 1100, after finishing refrigerator 1100 with RFID tag 121 being incorporated in refrigerator 1100, then, the power is turned on, and the refrigerator 1100 is inspected. A manufacturing label is affixed to refrigerator 1100 passing the inspection and the appliance information of refrigerator 1100 is written into RFID tag 121. In this way, the manufacturing serial number is given only to refrigerator 1100 passing the inspection. For example, a case is assumed, where the manufacturing label is affixed and the appliance information is written into RFID tag 121 and then, the finished product inspection is performed. In this case, a rejected product is found in the finished product inspection and is excluded, and there may be a problem of an unused number in manufacturing serial number being generated and a complexity in product and parts management remaining thereafter. However, according to the present embodiment, it is possible to prevent the above-described problem from occurring, in advance.

At the time of turning on the power for the finished product inspection, as similar to the case of turning on the power in the manufacturing process, refrigerator 1100 performs a cooling operation and thus, the condensation occurs or a smell caused by dust adhering to the condensation is generated. Therefore, it is necessary to perform work for removing these. However, such work has been performed before RFID tag 121 is mounted, and it is not a new process generated due to the use of RFID tag 121, and therefore, does not decrease the productivity.

According to refrigerator 1100 in the present embodiment, when the user turns on the power, the appliance information is written into control unit 1200 of refrigerator body 101 from RFID tag 121, and is stored. When the replacement of the parts is needed due to the failure of the parts, the user causes mobile terminal 122 to approach RFID tag 121. In this way, mobile terminal 122 can receive the ID number which is specific information such as the product number of refrigerator 1100, and can transmit the ID number to the service agent via the Internet line.

The operation of the home appliance service system configured as described above will be described using Fig. 16. Here, the description will be focused on the transmission and receiving of the information between RFID tag 121 and mobile terminal 122.

First, the process starts from the state in which the ID number of refrigerator 1100 is stored and held in RFID tag 121 (S101).

In this state, the detection of opening and closing of door 111b is performed by door opening and closing detection unit 125 and the door opening and closing information is updated, and then, the frequency of door opening and closing is stored in frequency storage unit 127 and the door opening time is stored in time storage unit 129 (S102).

Data request detection unit 31 checks whether or not there is the data request from mobile terminal 122 (S103).

If there is no data request in STEP S103, the process proceeds to STEP S104.

Next, clock unit 128 checks whether or not one day (24 hours) has passed from the previous update of door opening and closing information (S104). In STEP S104, if it is determined that one day has not passed, the process returns to S102. On the other hand, in STEP S104, if it is determined that one day has passed, the process proceeds to S105.

In STEP S105, the door opening and closing information stored in time storage unit 129 and frequency storage unit 127 up to that time in STEP S102 is reset and the process returns to S102.

Here, it is assumed that the user causes antenna 133 portion of mobile terminal 122 to approach RFID tag 121 on door 111b of refrigerator 1100 and to transmit the data request signal (S106).

Data request detection unit 131 detects the data request and RFID tag 121 starts the operation.

RFID tag 121 acquires the ID number, and in the present embodiment, and acquires the door opening and closing information such as the frequency of the door opening and closing and the accumulated door opening time stored in frequency storage unit 127 and time storage unit 129 respectively (S107).

Next, RFID tag 121 transmits the information to mobile terminal 122 via antenna unit 121a (S108).

Mobile terminal 122 receives the information transmitted from refrigerator 100 (S109).

Mobile terminal 122 transmits the received information to the server (host computer) of the service agent via the Internet line or displays the information on display unit 139 (S110).

In this way, in the present embodiment, it is possible for the user to cause mobile terminal 122 to closely and directly approach target refrigerator 1100 itself and to acquire the data. Accordingly, even if the user is elderly or children, it is possible to receive the ID number which is the specific appliance information such as the product number, and to transfer the information to the service agent without taking a mistake. Therefore, it is possible for the user to receive an exact repair service from the service agent.

In the present embodiment, since RFID tag 121 has a receiving function, at the time of the parts replacement by the service agent, it is possible to prevent the parts from being replaced in advance without being aware of the mistake in parts replacement.

For example, if RFID tag 121 in which the appliance information is written is provided on the part, at the time of part replacement, the information exchange between the part and ID number storage unit 130 of control unit 1200 is performed, and then if there is a mismatch between the parts, it is possible to notify the user of such a mismatch. Accordingly, it is possible to be certainly aware of the incorrect parts which easily occurs by mistakenly viewing the product label affixed to the part, and it is possible to prevent the part from being replaced without being aware of the mistake in part replacement in advance.

In addition, at the time of receiving the service, by replacing the part on which RFID tag 121 is provided, it is important that the data such as ID number which is appliance information is not lost or mistakenly replaced. However, in refrigerator 1100 in the present embodiment, the ID number which is the appliance information is written into ID number storage unit 130 of control unit 1200 from RFID tag 121 and is stored therein when the power of refrigerator 1100 is turned on. Therefore, even if the part and the appliance information are lost together, it is possible to perform the recovery.

In addition, by the user causing mobile terminal 122 to approach RFID tag 121, for example, the information of the set temperature for cooling is transmitted to mobile terminal 122 via the Internet line in advance, and then, such information can be transmitted to RFID tag 121 from mobile terminal 122. In this way, RFID tag 121 receives the set temperature information and transmits the information to control unit 1200 of refrigerator 1100, thereby changing the set temperature for cooling.

In addition, in the present embodiment, by transmitting the appliance information of an individual product to the server of service agent via mobile terminal 122, the content of service can be expanded as well. For example, based on the refrigerator operation information transmitted from mobile terminal 122, the operation status or the operation history of the individual product is accumulated in the server, and it is possible to provide a service in which the operation status or the operation history can be notified to the user via mobile terminal 122. Furthermore, the individual product is identified, and the operation status data of each individual product is managed so as to be provided to the user for viewing. Accordingly, it is possible to provide a service, for example, in which comparison with the way of using the individual product in other households, ranking of power saving, or the comparison with the using status in the past to the user.

At the time of receiving the service, in order to secure the traceability of the product, the individual product needs to be identified. However, in the present embodiment, since the appliance information is stored in ID number storage unit 130 of control unit 1200, the appliance information can be verified by the communication with mobile terminal 122 and thus, it is possible to specify an individual product without mistake.

In refrigerator 1100 in the present embodiment, by viewing display unit 139 of mobile terminal 122, the user can ascertain the door opening and closing information such as the frequency of door opening and closing and the accumulated door opening time. In this way, for example, when the frequency of door opening and closing and the accumulated door opening time are large, the user can reduce the frequency of door opening and closing thereafter, and can take an action for promoting the energy saving.

Furthermore, since refrigerator 1100 does not need the display power for notifying the user of the frequency of the door opening and closing and the accumulated door opening time, it is possible to save that much power, and to improve the energy conservation of refrigerator 1100. The user can ascertain the frequency of the door opening and closing and the accumulated door opening time via display unit 139 of mobile terminal 122. Therefore, refrigerator 1100 itself absolutely does not consume the power for displaying the frequency of the door opening and closing and the accumulated door opening time. Therefore, it is possible to further promote energy conservation by that much.

Furthermore, in the present embodiment, data request detection unit 131 is provided at refrigerator 1100 side, and only in a case where data request detection unit 131 detects that the data is requested from mobile terminal 122, the power is supplied to RFID tag 121 and RFID tag 121 transmits the information. In this way, the power is not consumed by RFID tag 121 when the data is not requested from mobile terminal 122, and then it is possible to achieve that much power conservation.

In addition, in the present embodiment, RFID tag 121 is provided on door 111b of refrigerating room 102 which is the uppermost portion of refrigerator 1100, that is, door 111b of the uppermost storage room among a plurality of storage rooms. In this way, such a failure that occurs in a case of providing RFID tag 121 on the doors located at the lower part, can be prevented from occurring. For example, there is no such a failure in which the cooling air which leaks and falls down when the door positioned upper than the door on which RFID tag 121 is provided is opened touches RFID tag 121, and the condensation occurs on the surface of RFID tag 121, and thus, the communication state deteriorates and the component reliability decreases. In the present embodiment, the exchange of the frequency of the door opening and closing and the accumulated door opening time between mobile terminal 122 and RFID tag 121 can be accurately and reliably performed, and thus, it is possible to configure refrigerator 1100 with high quality, and thus, the user can safely use refrigerator 1100.

One of issues of refrigerator 1100 in a case of communicating by an operation of touching refrigerator 1100 with mobile terminal 122 is the position where RFID tag 121 is disposed. In a case of a typical wireless communication device, there is no problem in disposing the device at the position which the user's hands cannot reach or the position which the user cannot see such as the rear surface or the top surface of refrigerator 1100. However, in the present embodiment, in order to prevent a mis-communication with other home appliances, in order for realizing a communication by the intuitive touching operation from the proximity distance, RFID tag 121 is disposed in the range where the hands reach, that is, at the front surface portion of refrigerator 1100 from the viewpoint of a convenience in using.

In a case where RFID tag 121 is disposed at the front surface of refrigerator 1100, the user makes his hand holding mobile terminal 122 be in proximity to refrigerator body 101. For this reason, there is a case where water or dirt attached to the hand is attached to the surface of antenna disposition portion of RFID tag 121 of refrigerator body 101, or water or dirt of the food spilt at the time of taking the food in and out, and is attached to the surface of antenna disposition portion of RFID tag 121 of refrigerator body 101, and thus, there is a possibility that the communication state of refrigerator body 101 deteriorates.

In addition, even though the hand may not be wet nor dirty, in order to perform the communication, when mobile terminal 122 itself which is a precision appliance or the hand holding mobile terminal 122 is brought into proximity with refrigerator body 101, there is also a possibility of a problem occurring that dirt or water of refrigerator body 101 is attached to the hand and causes an incorrect operation of a touch panel of mobile terminal 122, or makes the screen hard to see.

On the other hand, in refrigerator 1100 in the present embodiment, by providing RFID tag 121 as a communication unit on the uppermost door, the food is not taken in and out from the storage room at the portion above the communication unit, and thus, there is no possibility that the water or dirt is falling and attaching when the food is taken in and out.

In addition, when the opening and closing of the door is performed, the cooling air in the refrigerator flows out and spills to fall to the door positioned at the lower portion of the opened door, and thus the temperature of refrigerator 1100 decreases. Accordingly, when the temperature on the surface of RFID tag 121 provided on the door decreases to a temperature lower than the dew-point temperature due to the cooling air leakage, the condensation occurs, and there is a possibility that electromagnetic waves are inhibited by the water to cause a problem. On the contrary, according to the present embodiment, since RFID tag 121 is provided on uppermost door 111b, the opening and closing of the door of the storage room positioned at the portion above RFID tag 121 cannot be performed, the temperature of RFID tag 121 does not decrease, and there is no concern regarding the communication failure due to condensation.

In a layout in which freezing room 105 having low room temperature is disposed at the upper portion, particularly the temperature of the leaked cooling air decreases, and then the temperature of the lower door easily decreases, and therefore, the above-described fact has an advantageous effect.

In addition, in the short distance communication, in order to operate mobile terminal 122 for the communication, causing mobile terminal 122 to approach the home appliance is needed. At this time, there is a possibility that dirt or water of refrigerator 1100 is attached to mobile terminal 122 itself or to the hand holding mobile terminal 122, and thus, mobile terminal 122 is adversely affected by the problems of an incorrect operation of a touch panel of mobile terminal 122, making the screen hard to see or the quality of mobile terminal 122. However, according to the present embodiment, RFID tag 121 is covered by resin, and the attaching of dirt or water to the communication unit can be suppressed, and thus, it is possible to prevent the above-described problem.

Furthermore, the information of refrigerator side, for example, the frequency of door opening and closing or the like can be displayed on the display unit of the mobile terminal and can be ascertained, and thus, it is possible to reduce the display power used in a case where such a display unit is provided on the refrigerator body side.

In addition, in the present embodiment, RFID tag 121 is provided in a range of height of 900 mm or higher and 1500 mm or lower from the bottom of refrigerator body 101. For this reason, a typical housewife can cause mobile terminal 122 to approach RFID tag 121 without taking an excessive posture such as leaning down. Moreover, at that time, the user can cause mobile terminal 122 to approach RFID tag 121 with visibly recognizing display unit 139 of mobile terminal 122. Therefore, it is possible to improve the usability.

In addition, in the present embodiment, RFID tag 121 is provided on door 111b corresponding to refrigerating room 102 among a plurality of storage rooms. Since the temperature in refrigerating room 102 is higher than that in ice making room 103 or freezing room 105, it is possible to suppress the influence of the cooling air in the room on RFID tag 121 to be small. Therefore, since the difference in temperature between the surface and the inner portion of RFID tag 121 is suppressed to be small, and the occurrence of the condensation can be suppressed, it is possible to reduce the failure such as the deterioration of the communication state and the decrease of the component reliability.

Furthermore, in the present embodiment, RFID tag 121 is incorporated into operation unit 118 provided at the end portion of right side door 111b. There is a possibility that the user performs the affixing of the sticker to door 111b, in many cases the sticker is affixed to the center portion of door 111b. Thus, the surface of RFID tag 121 located at the end portion of door 111b is rarely covered by the sticker. Therefore, the user can directly cause mobile terminal 122 to closely face RFID tag 121, and the erroneous transmission and receiving of the data due to the approaching of mobile terminal 122 over the sticker can be reduced. In addition, the user does not need to perform the action for removing the sticker that covers the surface of RFID tag 121 for causing mobile terminal 122 to closely approach RFID tag 121, and thus, it is possible both to secure the reliable communication performance and to improve the usability.

In addition, in the present embodiment, RFID tag 121 is provided on right side door 111b of refrigerating room 102 among double-door type door 111. In this way, it is possible to reduce the occurrence of the failure with respect to RFID tag 121 due to the cooling air in the refrigerating room. Generally, there are relatively many right-handed users, and frequently, right side door 111b is opened and closed by the right-handed user. In a case where right side door 111b is opened and the cooling air in the refrigerating room leaks out, there is a high possibility that the cooling air diffuses to the surface of left side door 111a positioned at the opposite side to right side door 111b, and thus, the possibility that the cooling air goes around into the surface side of right side door 111b (RFID tag 121 installed side) which is the rear side when seen from the leaked cooling air, is very low.

Therefore, there is almost no possibility that the cooling air touches RFID tag 121 provided on the surface side of right side door 111b, and it is possible to suppress the failure such as the deterioration of the communication state and the decrease of the component reliability due to the condensation occurring on the surface of RFID tag 121.

Furthermore, in the present embodiment, right side door 111b is described as being shaped to have a size larger than that of left side door 111a. Right side door 111b and left side door 111a have asymmetrical shape. In this configuration, the opening and closing of door 111b having larger size is more frequent, and the amount of leaked cooling air when right side door 111b is opened increases compared to the reverse case. By RFID tag 121 being provided on the rear side of right side door 111b where the leaked cooling air increases, the influence of the going-around of cooling air described above can be reduced, and thus, it is possible to reduce concerns such as the deterioration of the communication state and the decrease of the component reliability.

In addition, on door 111b on which RFID tag 121 is provided, there is provided a wiring to operation unit 118 and a wiring through which the door opening and closing information from frequency storage unit 127 or time storage unit 129 in the control unit 1200 is transmitted. In the present embodiment, both of these are DC wirings and an AC wiring is not provided on door 111b. Accordingly, the noise occurring due to the AC wiring does not interfere with the transmission and receiving of RFID tag 121, and thus, it is possible to secure the accurate and reliable communication performance.

In addition, in the present embodiment, on right side door 111b of refrigerating room 102 on which RFID tag 121 is provided, in response thereto, automatic door opening and closing mechanism 117 is provided. In this way, even if a hand of a user working in the kitchen is wet with water, it is possible to reduce the failure of RFID tag 121 due to the influence of water. That is, since the user only slightly touches door 111b and door 111b is opened, at the time of opening and closing door 111b, it is possible to make the amount of water drops attached to the surface of door 111b be extremely small or cause the water drops not to be attached. In this way, accordingly, it is possible to prevent, when the user causes mobile terminal 122 to approach RFID tag 121, the water drops attached to the surface of door 111b from being attached to RFID tag 121 itself or mobile terminal 122 which is close to RFID tag 121, and then wetting or contaminating RFID tag 121 or mobile terminal 122. In this way, it is possible to reduce the occurrence of the failure such as the deterioration of the communication state and the decrease of the component reliability.

Furthermore, in the present embodiment, RFID tag 121 is disposed at the position separated from handle portions 116 provided on door 111b and the position higher than handle portion 116 (refer to Fig. 10). According to this configuration, in a case where the user's hand is wet, and when opening the door 111b by the wet hand, even though the water drops are attached to handle portion 116, since RFID tag 121 is separated from handle portion 116 and is positioned higher than handle portion 116, even though the water drops attached to handle portion 116 are spread to right and left side or drop down, the water drops do not reach the position where RFID tag 121 is disposed. In this way, even if mobile terminal 122 is brought to be close to RFID tag 121, it is possible to prevent RFID tag 121 itself or mobile terminal 122 which is close to RFID tag 121 from becoming wet or contaminated by the water drops attached to the surface of handle portion 116 of door 111b, and thus, it is possible to reduce the occurrence of the failure such as the deterioration of the communication state and the decrease of the component reliability.

As described above, according to the present embodiment, it is possible to provide refrigerator 1100 on which RFID tag 121 is mounted without decreasing the productivity.

An example described in the present embodiment is one aspect for realizing the present invention, and various modifications can be made within the objective scope of the present invention.

For example, in the present embodiment, the information provided to the user is both of the frequency of the door opening and closing and the accumulated door opening time for the power saving education. However, the information may be any one of the above. In addition, any other information may be provided.

In addition, in the present embodiment, RFID tag 121 is provided on the door of refrigerating room 102, but may be provided on the other door, for example, may be provided on left side door 111a of double-door type door. In a case where RFID tag 121 is provided on left side door 111a, when the user is a right-handed person, the user can easily open and close the right side door by the dominant hand without crossing the hand. In this way, it is possible to cause mobile terminal 122 to closely approach RFID tag 121 using the left hand at the same time as opening and closing door 111b by the right hand, and thus, the usability can be improved.

Furthermore, by providing the transmission and receiving unit at the refrigerator body 101 side also corresponding to RFID tag 121 provided on door 111b, when door 111b is opened, the transmission and receiving unit on refrigerator body 101 side may detect the opening. That is, RFID tag 121 on door 111b may also serve as a door opening and closing detection unit. In this way, it is possible to simplify the configuration. While it is preferable that the door opening and closing detection unit is also provided corresponding to all the doors, for example, however, it may be provided on one door of which the frequency of opening and closing is high or on a plurality of doors.

In addition, RFID tag 121 can receive the frequency of the door opening and closing information and the accumulated door opening time information from the control unit 1200 via the short distance communication rather than via the wiring.

For example, regarding the communication method, as long as the operation of identifying the operation target using the touching or holding operation with respect to the product is possible, other short distance communication methods can be used.

### INDUSTRIAL APPLICABILITY

As described above, according to the present invention, it is possible to achieve a particular effect in which a product label and an RFID tag for identifying the individual home appliance are centrally managed and a mismatch between the appliance information items is prevented in advance, and thus, services such as a management of parts or replacement of parts can easily be performed. Accordingly, the present invention can be deployed to a refrigerator or the like in a wide range for home and business use. Thus, it is useful.

### REFERENCE MARKS IN THE DRAWINGS

- 1, 101: refrigerator body
- 1a, 101a: outer box
- 1b, 101b: inner box
- 1c, 101c: rigid polyurethane foam
- 1d, 101d: vacuum heat insulating material
- 2, 102: refrigerating room
- 3, 103: ice making room
- 4, 104: temperature switching room
- 5, 105: freezing room
- 6, 106: vegetable room
- 7, 107: machine room
- 8, 108: compressor
- 9, 109: cooler
- 10, 110: cooling fan
- 11 to 15, 11a, 11b, 111 to 115, 111a, 111b: door
- 16, 116: handle portion
- 17, 117: automatic door opening and closing mechanism
- 18, 118: operation unit
- 18a, 118a: operation nameplate
- 18b, 118b: substrate housing unit
- 18c, 118c: first substrate
- 18d, 118d: second substrate
- 19, 119: setting switch
- 20, 120: setting status display unit
- 21, 121: RFID tag
- 21a, 121a: antenna unit
- 22, 122: mobile terminal
- 23: product label
- 25, 125: door opening and closing detection unit
- 26, 126: frequency counter unit
- 27, 127: frequency storage unit
- 28, 128: clock unit
- 29, 129: time storage unit
- 30: device information storage unit
- 31, 131: data request detection unit
- 33, 34a, 133, 134a: antenna
- 32, 132: first communication unit
- 34, 134: second communication unit
- 35, 135: first communication control unit
- 36, 136: second communication control unit
- 37, 137: display control unit
- 38, 138: mobile control unit
- 39, 139: display unit
- 40, 140: operation unit
- 41, 141: storage unit
- 100, 1100: refrigerator
- 130: ID number storage unit
- 200, 1200: control unit

## Claims

1. A refrigerator comprising:
an RFID tag in which appliance information is stored;
a product label that indicates the appliance information; and
a plurality of parts that configure the refrigerator,
wherein the product label and the RFID tag are disposed on a same part among the plurality of parts.

2. The refrigerator of Claim 1,
wherein the same part is a door.

3. The refrigerator of Claim 1 or Claim 2, further comprising:
an appliance information storage unit that stores a same appliance information as the appliance information stored in the RFID tag; and
a control unit that issues a warning in a case where there is a mismatch between the appliance information stored in the RFID tag and the appliance information stored in the appliance information storage unit.

4. The refrigerator of Claim 2 or Claim 3,
wherein the RFID tag is provided on an outer surface of the door, and the product label is mounted on an inner surface of the door.

5. The refrigerator of any one of Claim 2 to Claim 4, further comprising the plurality of doors,
wherein the RFID tag is provided on an uppermost door among the plurality of doors.
